(19) Europäisches Patentamt / European Patent Office / Office européen des brevets

(11) **EP 3 041 598 B1**

(12) **EUROPEAN PATENT SPECIFICATION**

(45) Date of publication and mention
of the grant of the patent:
**30.10.2019 Bulletin 2019/44**

(51) Int Cl.:
**B01D 61/50** *(2006.01)*  **B01D 61/44** *(2006.01)*
**H01M 2/14** *(2006.01)*  **H01M 8/22** *(2006.01)*

(21) Application number: **14761319.4**

(22) Date of filing: **02.09.2014**

(86) International application number:
**PCT/EP2014/068635**

(87) International publication number:
**WO 2015/028685 (05.03.2015 Gazette 2015/09)**

(54) **APPARATUS AND METHOD FOR PRODUCT RECOVERY AND ELECTRICAL ENERGY GENERATION**

VORRICHTUNG UND VERFAHREN ZUR PRODUKTWIEDERGEWINNUNG UND ELEKTRISCHE ENERGIEERZEUGUNG

APPAREIL ET PROCÉDÉ DE RÉCUPÉRATION DE PRODUIT ET GÉNÉRATION D'ÉNERGIE ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.09.2013 EP 13182632**

(43) Date of publication of application:
**13.07.2016 Bulletin 2016/28**

(73) Proprietor: **VITO NV (Vlaamse Instelling voor Technologisch Onderzoek NV) 2400 Mol (BE)**

(72) Inventors:
• **ZHANG, Yang Qingdao Shandong 266101 (CN)**
• **HELSEN, Joost B-2400 Mol (BE)**

(74) Representative: **Pronovem Office Van Malderen Avenue Josse Goffin 158 1082 Bruxelles (BE)**

(56) References cited:
EP-A2- 0 368 203  WO-A1-2012/061215
FR-A- 1 378 073  JP-A- S62 105 922
US-A- 5 843 316

• DLUGOLECKI P ET AL: "Current status of ion exchange membranes for power generation from salinity gradients", JOURNAL OF MEMBRANE SCIENCE, ELSEVIER SCIENTIFIC PUBL.COMPANY. AMSTERDAM, NL, vol. 319, no. 1-2, 1 July 2008 (2008-07-01), pages 214-222, XP022696410, ISSN: 0376-7388, DOI: 10.1016/J.MEMSCI.2008.03.037 [retrieved on 2008-03-30]
• STRATHMANN ET AL: "Electrodialysis, a mature technology with a multitude of new applications", DESALINATION, ELSEVIER, AMSTERDAM, NL, vol. 264, no. 3, 31 December 2010 (2010-12-31), pages 268-288, XP027484168, ISSN: 0011-9164, DOI: 10.1016/J.DESAL.2010.04.069 [retrieved on 2010-11-09]
• ROBBINS B J ET AL: "Rationalisation of the relationship between proton leakage and water flux through anion exchange membranes", JOURNAL OF MEMBRANE SCIENCE, ELSEVIER SCIENTIFIC PUBL.COMPANY. AMSTERDAM, NL, vol. 118, no. 1, 4 September 1996 (1996-09-04), pages 101-110, XP004041790, ISSN: 0376-7388, DOI: 10.1016/0376-7388(96)00095-6

## Description

### Field of the Invention

The present invention relates to an apparatus, the use thereof, and related method for product recovery by diffusion dialysis and (simultaneously) also generating electrical energy.

More particularly, the present invention relates to recovering, by diffusion dialysis, acid compounds from an acid comprising waste stream and (simultaneously) also generating electrical energy.

### Background of the Invention

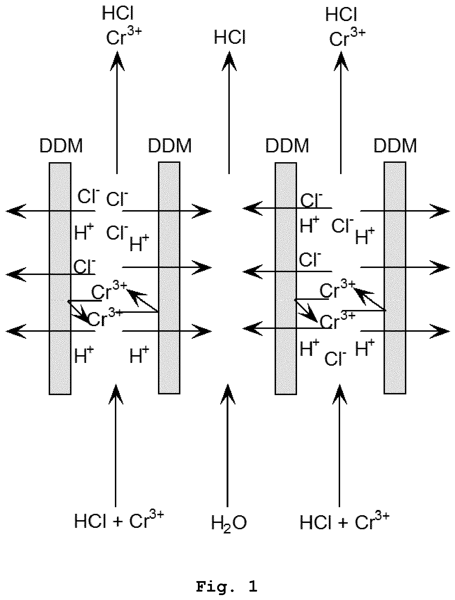

Diffusion dialysis (DD) is an ion-exchange membrane (IEM) separation process driven by concentration gradient. The principle of DD is illustrated in **Figure 1,** which is a schematic diagram for recovery of HCl and $Cr^{3+}$ from an acid waste by using conventional diffusion dialysis. Chlorides ($Cl^-$) pass through the stack of (identical) diffusion dialysis membranes (DDM), in this example being (identical) positively charged anion exchange membranes (AEM), and diffuse from the diluate to the dialysate due to concentration gradient. Meanwhile, protons also pass through the DDM, because of the small size of protons and their high mobility in water, and keep electrical neutrality of the solution. Chromium ions ($Cr^{3+}$) are positively charged and have poor mobility, and are therefore kept in the diluate solution. As such, HCl is recovered in the dialysate.

To date, DD has been used in various industrial applications, such as steel production, metal-refining, electroplating, ion exchange resin regeneration, non-ferrous metal smelting, aluminum etching, and tungsten ore smelting, for acid (or base (alkali)) recovery from waste streams, and also for extracting organic acids from fermentation broths, as e.g. described by Luo et al (Journal of Membrane Science 366 (2011) 1-16). Luo et al for example describe that in industries for a variety of metals etching and stripping processes, large quantities of spent liquor are produced during pickling steps. More particularly, it is described that $2 \times 10^5$ to $4 \times 10^5$ kg or ~120 $m^3$ of $H_2SO_4$ (with concentration around 4.5M) waste is produced when one ton titanium white is produced, and $2 \times 10^5$ to $4 \times 10^5$ kg of HF and $HNO_3$ (with concentration around 4M) waste is generated when one ton of titanium material is processed. Such large quantities of acid have to be recovered to meet environmental and economic requirements.

Also various patents describe the recovery of acid (or base) compounds and metal ions from waste liquors by diffusion dialysis processes (e.g. US patent 5,062,960; US patent 4,954,262; US patent 4,765,905; US patent 6,358,484; US patent 5,843,316).

In the DD process, high concentration of acid (or base) diffuses from the diluate compartment to the dialysate compartment, recovering around 1-6 M acid (or base) with a recovery rate of around 80%.

Therefore, DD is regarded as a promising technology to recover acid (base) compounds. Moreover, since this technology has low energy consumption, low installation and operational cost, and almost no environmental pollution. However, conventional DD also has limitations, such as relatively low processing capability and low efficiency. Moreover, although the dilute energy is huge, it cannot be collected using DD, as the $H^+$ ($OH^-$) and the anions (cations) migrate together in the same direction through the same DDM.

Indeed, as shown in **Figure 1,** $H^+$ and $Cl^-$ pass through the same DDM and thus no electrical potential difference can be built up by conventional DD (thus no electricity can be generated).

On the other hand, Reverse Electrodialysis (RED) is designed to generate power from a mixing of a seawater/concentrated brine with fresh water, as described in e.g. EP 1 746 680; US patent 7,736,791; WO 2010/062175.

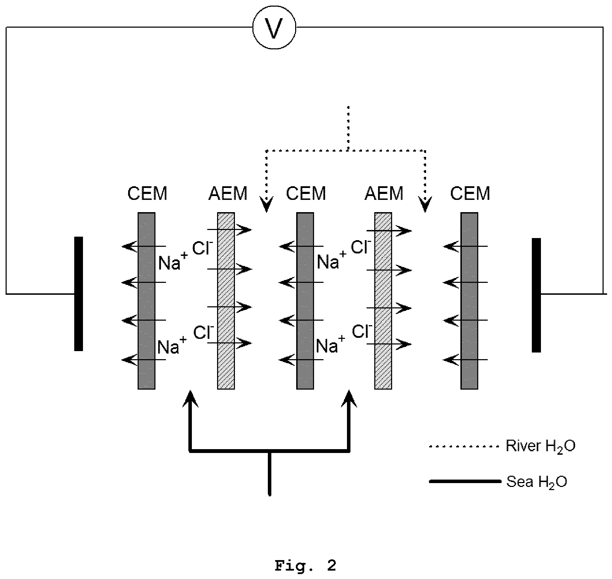

The principle of RED is illustrated in **Figure 2,** where sodium ($Na^+$) is passing through cation exchange membranes (CEM) and chloride ($Cl^-$) is passing through anion exchange membranes (AEM) by diffusion. From the directional migration of the ions and the resulting concentration gradient (of salts), an electrical potential difference is built up across the membranes and electricity can thus be generated.

However, RED applications are highly restricted by the geographic location, i.e., RED systems have to be installed in a location with a mixing of seawater/river water. Another disadvantage is that only NaCl concentration gradient is used in these systems. Moreover, RED is a dilution process, i.e. no useful (chemical) products are produced from this process, more particularly, no acid or base compounds are recovered.

US patent 4,311,771 and WO 2012/061215, for example, describe methods and apparatuses based on a RED configuration, utilizing acid and base streams from industries. More particularly, both AEMs and CEMs are used in the (modified) RED stack, either with or without bipolar membranes, thereby neutralising the acid and base, and producing power from the acid-base diffusion process. However, these processes must use acid and base compounds together, and do not produce useful chemicals either (no recovery of acids nor bases). Indeed, they are acid-base neutralization processes (instead of a dilution process in conventional RED).

Document JP S62 105922 provides an electrolysis system in which a diaphragm electrolytic tank and a diffusion dialysis tank are combined. The system is described to be capable of efficiently separating and recovering metals and acids from an aqueous solution. Referring to Fig. 1 of this document, a stock solution (9) is supplied to a deoxidizing chamber (2) of the diffusion dialysis tank (1), and is deoxidized. Subsequently, the deoxidized solution is supplied to a cathode chamber (6) of the diaphragm electrolytic tank (5) to deposit metals on the cathode, and the metals are recovered. The liquid extracted from the cathode chamber (6) is supplied as an acid recovery liquid (10) to an acid recovery chamber (3) of said diffusion dialysis tank (1). The liquid (11) after the acid is recovered, is supplied to an intermediate chamber (7) of said diaphragm electrolytic tank (5), and then mixed with said stock solution (9) in order to recover the unrecovered metal. An anode chamber liquid (12) is supplied to an anode chamber (8) by means of a circulation line, and a part thereof is extracted to recover acids. The chlorine gas and oxygen gas generated in the anode chamber are stored in a gas tank (13). In the diffusion dialysis tank (1), one anion exchange membrane (4) is used, being preferably a membrane in which exchange groups uniformly exist. In the electrolytic tank (5), an arrangement of successive, identical anion exchange membranes (4) is used, the membranes (4) having a two-layer structure, in which the exchange group density on one surface is different from the exchange group density on the other surface.

### Aims of the Invention

Aspects of the present invention envisage providing an improved diffusion dialysis apparatus and related method for product recovery by diffusion dialysis, which overcome the disadvantages of prior art apparatuses and methods.

Aspects of the present invention therefore envisage providing such diffusion dialysis apparatuses and methods which allow recovering products from a feed stream (by diffusion dialysis), simultaneously also generating electrical energy.

Aspects of the present invention envisage providing such diffusion dialysis apparatuses and methods which also allow improving the performance of the apparatus and the processing capability of the related method (compared to prior art apparatuses and methods).

Aspects of the present invention envisage providing such diffusion dialysis apparatuses and methods which also allow (further) lowering the total (operational) cost (compared to prior art apparatuses and methods).

### Summary of the Invention

According to aspects of the invention, there is therefore provided a diffusion dialysis apparatus, as set out in the appended claims.

According to one aspect of the present invention, it is provided a diffusion dialysis apparatus (15) comprising a plurality of (first and second) anion exchange membranes (1,2) arranged so as to form a stack of successive cell units (16), each cell unit (16) comprising a dialysate compartment (4) configured for passing a dialysate solution (7) and for collecting acid compounds recovered from a feed, a feed compartment (5) configured for passing a stream of the feed (6) comprising acid waste with a concentration gradient of the acid between the feed and dialysate solution, and two (first and second) anion exchange membranes (1,2) stacked so as to be interleaved with the dialysate compartment (4) and the feed compartment (5); characterised in that the apparatus comprises an anode (12) and a cathode (13), wherein the cell units (16) are placed between the anode (12) and the cathode (13), and in that successive (first and second) anion exchange membranes (1,2) in the stack of successive cell units (16) are alternately a higher (or first) proton transport anion exchange membrane (1) and a lower (or second) proton transport anion exchange membrane (2), wherein the higher (or first) proton transport anion exchange membrane (1) has a first $H^+$ transport number and the lower (or second) proton transport anion exchange membrane (2) has a second $H^+$ transport number, the second $H^+$ transport number being smaller than the first $H^+$ transport number, such that, in use, the transport of protons through the higher (or first) proton transport anion exchange membrane (1) is higher when compared to the transport of protons through the lower (or second) proton transport anion exchange membrane (2) and acid compounds (coming) from the stream of feed (6) (said stream (6) passing in the feed compartment (5)) are recovered in the dialysate compartment (4) by diffusion dialysis and electrical energy is generated from the directional migration by diffusion dialysis of protons and anions.

According to other aspects of the invention, there is provided the use of the diffusion dialysis apparatus of the invention for recovering acid compounds from a feed stream and generating electrical energy (by diffusion dialysis), as set out in the appended claims.

According to other aspects of the invention, there is provided a method for recovering acid compounds from a feed stream and generating electrical energy (by diffusion dialysis), as set out in the appended claims.

Advantageous aspects of the present invention are set out in the dependent claims.

### Short Description of the Drawings

Aspects of the invention will be described in more detail with reference to the appended drawings, wherein same reference numerals illustrate same features. In the drawings, not all alternatives and options are shown and therefore the invention is not limited to the content of the given drawings.

**Figure 1** represents a prior art conventional diffusion dialysis (DD) stack.
**Figure 2** represents a prior art conventional reverse electrodialysis (RED) stack.
**Figure 3** represents a multi-compartment stack according to an aspect of the present invention, for recovering acid compounds from a feed stream.
**Figure 4** represents a multi-compartment stack which is not according to the present invention, for recovering base (or alkali) compounds from a feed stream.
**Figure 5** shows an example of a stack comprising six compartments, according to an aspect of the present invention, for recovering acid compounds from a feed stream.

## Description of the Invention

In the context of the present invention, an ion exchange membrane (IEM) refers to a permselective membrane comprising electrically charged functional sites of a specific charge type, typically arranged in interstices, and which have the ability to allow particular ions diffusing through the interstices while rejecting others, at least based on their charge type (positive or negative). It will be convenient to note that, typically, an ion-exchange membrane is not fully permselective, but nevertheless can have high permselectivity (e.g. 98 % or higher). Typically, ion exchange membranes do not have an interconnected porosity, which makes ion exchange membranes not suitable for separation of compounds from a fluid based solely on particle size.

In the context of the present application, an ion exchange membrane can refer to an anion exchange membrane (AEM), or a cation exchange membrane (CEM). An anion exchange membrane refers to an ion exchange membrane (IEM) having positively charged functional sites (e.g. quaternary ammonium groups) only allowing anions through it. Similarly, a cation exchange membrane refers to an ion exchange membrane having negatively charged functional sites (e.g. sulfonate groups) only allowing cations through it. It will be convenient to note that the terms anion exchange membrane and cation exchange membrane as used in the present description can refer to such exchange membranes being selective for a particular anion or cation respectively. Moreover, depending on the proton transport property of a given anion exchange membrane, protons can possibly pass through the AEM, due to their small size, low valence state and high mobility, although $H^+$ being positively charged. Likewise, depending on the hydroxyl transport property of a given cation exchange membrane, hydroxyl anions can possibly pass through the CEM, although $OH^-$ being negatively charged. Ions having the opposite sign compared to the charge of the IEM are referred to as counter-ions. Co-ions are ions having the same sign as the charge of the IEM.

In the context of the present application, feed stream refers to a solution flowing through at least every second compartment 5, 5' (of the stack of the apparatus), referred to as feed compartments (or diluate compartments). In the present description, feed stream is also referred to as feed, feed solution, diffusate, diffusate solution, diluate, or diluate solution.

In the context of the present application, dialysate stream refers to a solution flowing through at least every second compartment 4, 4' (of the stack of the apparatus), referred to as dialysate compartments (or recovery compartments). In the present description, dialysate stream is also referred to as dialysate, or dialysate solution.

In the context of the present application, dialysate compartments refer to recovery compartments (4, 4'), whereas diffusate compartments refer to feed compartments (or diluate compartments) (5, 5').

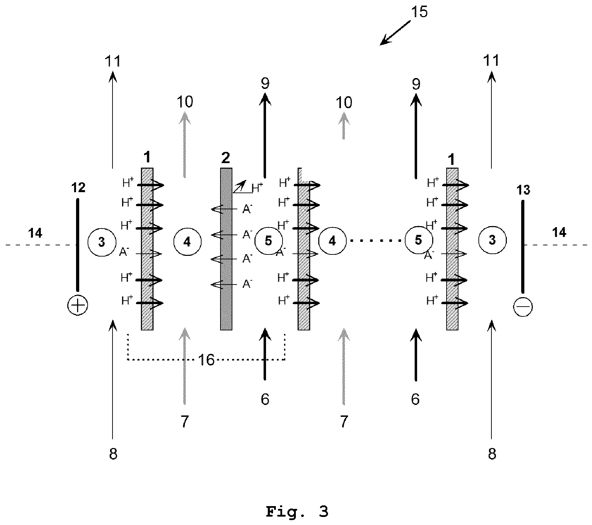

Referring to **Figure 3,** a diffusion dialysis apparatus 15 according to aspects of the invention comprises a plurality of (positively charged) (first and second) anion exchange membranes (AEM) 1, 2 forming a stack of successive (or consecutive) compartments (or cells) 4, 5. The successive compartments 4, 5 are separated from each other by one of the plurality of (first and second) AEMs 1, 2. As shown in **Figure 3,** the apparatus (or system or module) of the invention comprises a (positive) anode 12 and a (negative) cathode 13, the (first and second) AEMs 1, 2 (or stack of compartments) being placed in between. More particularly, in apparatuses according to the invention as illustrated in **Figure 3,** successive (first and second) AEMs 1, 2 are alternately a higher (or first) proton transport anion exchange membrane 1 and a lower (or second) proton transport anion exchange membrane 2 (when compared to each other). More particularly, in the apparatus of the invention, the transport of protons ($H^+$) through the higher (or first) proton transport AEM 1 is higher when compared to the transport of protons through the lower (or second) proton transport AEM 2, under same conditions. More particularly, the transport of protons through first AEM 1 is higher when compared to the transport of protons through second AEM 2. In other words, the higher (or first) proton transport AEM 1 has a first $H^+$ (proton) transport number and the lower (or second) proton transport AEM 2 has a second $H^+$ transport number, the second $H^+$ transport number being smaller (or lower) than the first $H^+$ transport number, when considered under given (same) circumstances. In other words, first AEM 1 has a first $H^+$ transport number and second AEM 2 has a second $H^+$ transport number, the second $H^+$ transport number being smaller (or lower) than the first $H^+$ transport number. Advantageously, in the apparatus of the invention, the higher (or first) proton transport AEM 1 is configured for transporting anions along with protons through the (first) AEM 1, while the lower (or second) proton transport AEM 2 is a (so-called) proton blocking membrane configured for only transporting anions through the (second) AEM 2 and for substantially blocking protons.

In the context of the present invention, transport number refers to a ratio (of transported charges) of transporting a specific ion with respect to the total ions (with the same charge sign, present in the solution). Suitable methods for measuring the transport number are known to those skilled in the art.

Advantageously, the specific membrane resistance for the anion passing the (first and second) AEMs 1, 2 is lower than (about) 500 $\Omega$cm.

Advantageously, the areal membrane resistance for the anion passing the (first and second) AEMs 1, 2 is lower than (about) 10 $\Omega$cm$^2$.

Suitable methods for measuring the (specific or areal) membrane resistance are known to those skilled in the art.

Advantageously, the (first and second) AEMs 1, 2 have a transport number for the anion (counter-ion) passing the membrane being higher than 0.5, advantageously being comprised between (about) 0.7 and (about) 1. Suitable methods for measuring the transport number of the counter-ion are known to those skilled in the art.

Advantageously, the (first) AEMs 1 have a H$^+$ transport number being higher than 0.5. Advantageously, the (second) AEMs 2 have a H$^+$ transport number being lower than 0.5. Suitable methods for measuring the H$^+$ transport number will be apparent to those skilled in the art.

Advantageously, the thickness of the (first and second) AEMs 1, 2 is comprised between (about) 10 and (about) 500 $\mu$m, advantageously is lower than (about) 200$\mu$m.

Suitable higher (or first) proton transport AEMs 1 and lower (or second) proton transport AEMs 2 for use in the apparatuses of the invention are known to those skilled in the art. Examples of commercially available, higher (or first) proton transport AEMs 1 are diffusion dialysis membranes (DDM) DF-120 (Tianwei, China) and FAD (FuMA-Tech GmbH, Germany). An example of a commercially available, lower (or second) proton transport AEM 2 is proton blocker membrane FAB (FuMA-Tech GmbH, Germany).

As illustrated in **Figure 3,** an apparatus according to the present invention comprises a stack of successive cell units 16 (illustrated by the dashed box in **Figure 3)**; each cell unit 16 comprising a recovery compartment 4 (or dialysate compartment) configured for passing a dialysate solution (7) and for collecting acid compounds recovered from a feed (comprising acid waste), a feed compartment 5 configured for passing a stream of the feed (6) (comprising acid waste, with a concentration gradient of the acid between the feed and the dialysate solution), and two successive (first and second) anion exchange membranes 1, 2. The successive (first and second) AEMs 1, 2 are interleaved with the recovery compartment 4 and the (successive) feed compartment 5. The recovery compartment 4 and the feed compartment 5 alternate in the stack between the anode 12 and the cathode 13.

According to an aspect of the present invention, a stack as in apparatus 15 shown in **Figure 3** can be used for recovering acid compounds from a feed (by diffusion dialysis) and simultaneously generating electrical energy (from the directional migration by diffusion dialysis of protons and anions). More particularly, the recovered acid compounds comprise monovalent anions or multivalent anions (such as divalent or trivalent anions). Advantageously, the recovered acid compounds comprise HCl, HF, HNO$_3$, H$_2$SO$_4$, H$_3$PO$_4$, or (small) organic acids (such as formic acid, or acetic acid).

As already described above, **Figure 3** shows a stack of N repeating cell units 16, representing a multi-compartment stack according to an aspect of the present invention. As illustrated in **Figure 3,** high(er) (or first) proton transport AEMs 1 and low(er) (or second) proton transport AEMs 2 are arranged (in parallel), possibly with spacers in between (not shown here). Due to such successive (consecutive) arrangement of N unit cells, the recovery compartment 4 and the feed compartment 5 alternate in the stack between the anode 12 and the cathode 13.

In a method of the invention (and referring to figure 3), a (initial) feed stream of spent acid (solution) 6 with impurities (or feed influent, comprising acid waste) flows through feed compartments 5 and a (initial) stream of dialysate solution 7 (or dialysate influent, or acid recovery stream influent) flows through recovery compartments 4, with a concentration gradient (of the acid) between the waste solution and the dialysate solution. Due to the concentration gradient (of the ions across the membranes), anions (A$^-$) (present in the feed stream 6) pass from the feed compartment 5 through the low(er) (or second) proton transport AEM 2 to the acid recovery compartment 4 (in the direction of the positive anode 12). Anions (present in the feed stream 6) also pass through the high(er) (or first) proton transport AEM 1 to the acid recovery compartment 4 (in the direction of the negative cathode 13). Moreover, as in the method of the invention, the higher (or first) proton transport AEM 1 has a first H$^+$ (proton) transport number and the lower (or second) proton transport AEM 2 has a second H$^+$ transport number, the second H$^+$ transport number being smaller (or lower) than the first H$^+$ transport number (when considered under given (same) circumstances), the transport of protons (H$^+$) through the higher (or first) proton transport AEM 1 is higher when compared to the transport of protons through the lower (or second) proton transport AEM 2 (under same conditions). As such, protons (present in the feed stream 6) are also permitted passage, along with the anions, from the feed compartments 5 through the high(er) (or first) proton transport AEM 1 to the acid recovery compartment 4 (in the direction of the negative cathode 13), due to the small H$^+$ size, their low valence state and high mobility (although H$^+$ being positively charged) and the high H$^+$ transport property of this (first) AEM 1.

5

However, protons are much less likely to pass, or even do not substantially pass, from the feed compartments 5 through the low(er) (or second) proton transport AEM 2 (in the direction of the positive anode 12), due to the low proton transport properties of this (second) AEM 2 (AEM 2 substantially blocking protons). A resulting net flow of protons is thus sustained through the higher proton transport anion exchange membrane (1). Meanwhile, the (cationic) impurities in the feed, such as (heavy) metals (e.g. $Cr^{3+}$), which are comparatively large relative to the protons and positively charged, do not pass these (first and second) anion exchange membranes 1 or 2 and hence are rejected, and remaining in the feed effluent 9. This thus results in acid depleted (metal-bearing) compartments 5 and acid-recovered dialysate compartments 4 (collecting acid compounds from the feed influent (or feed stream) 6). The feed effluent 9 can be further processed (through adequate means) for purification or neutralization, while the recovered (collected) acid in the dialysate effluent 10 can be re-used.

According to the invention, acid compounds are recovered in the dialysate effluent 10. Simultaneously, an electrical potential is built up through the stack due to the directional migration (by diffusion dialysis) of the protons and anions. According to the invention, electricity can thus be generated.

It will be convenient to note that the processes and apparatuses according to the invention fundamentally differ from those already described in prior art. Indeed, in the DD apparatuses and related processes already described in the art, a stack of successive, identical ion exchange membranes (thus IEMs of the same type, having the same charge and the same ion transport properties) are placed in a stack. As illustrated in **Figure 1** for example, in a stack of positively charged, identical DDMs (AEMs), anions and protons (present in a feed stream) are passing together through the DDMs due to the concentration gradient across the membranes, and acid compounds can be recovered, but no net flow of protons (and as a consequence, no electrical energy) is generated. Moreover, it is convenient to note that in a conventional DD apparatus described in prior art, no anode and cathode is present.

It will be convenient to note that the high $H^+$ transport property of (first) AEM 1 versus the low $H^+$ transport property of (second) AEM 2 is a key to the apparatus and method according to the present invention.

In the present invention, electrode rinsing solution influent 8 and effluent 11 is used to rinse the anode 12 and the cathode 13 and electricity conductive wires 14 are connected from the stack with a piece of electricity consumption equipment. By providing a load (not shown) between the anode 12 and the cathode 13 of the diffusion dialysis apparatus of the invention as illustrated in **Figure 3,** the generated electrical energy (electricity) is harnessed.

Carrying out a method according to the invention, acid compounds are thus recovered from a feed stream (comprising acid waste), simultaneously also generating electrical energy (or electric power, or electricity).

It will be convenient to note that alternatively, in an aspect not according to the invention, a stack as in apparatus 15 shown in **Figure 3** with the plurality of (first and second) anion exchange membranes 1, 2 being substituted by (first and second) cation exchange membranes 1', 2' is also possible in an analogous way. This requires the (positive) anode 12' to be placed at the right hand side and the (negative) cathode 13' to be placed at the left hand side, compared to the stack of **Figure 3.**

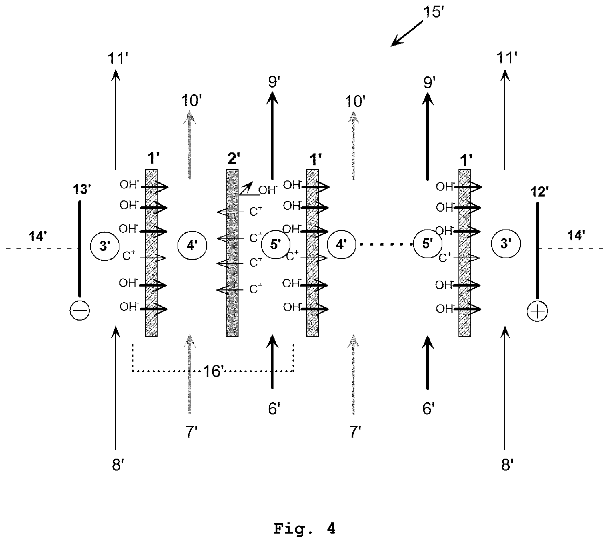

**Figure 4** is showing such an alternative stack in a diffusion dialysis apparatus 15' not according to aspects of the invention, comprising a plurality of (negatively charged) (first and second) cation exchange membranes (CEM) 1', 2' forming a stack of successive (or consecutive) compartments (or cells) 4', 5'. The successive compartments 4', 5' are separated from each other by one of the plurality of (first and second) CEMs 1', 2'. As shown in **Figure 4,** the apparatus (or system or module) not according to the invention comprises a (positive) anode 12' and a (negative) cathode 13', the (first and second) CEMs 1', 2' (or stack of compartments) being placed in between. In apparatuses not according to the invention as illustrated in **Figure 4,** successive (first and second) CEMs 1', 2' are alternately a higher (or first) hydroxyl transport cation exchange membrane 1' and a lower (or second) hydroxyl transport cation exchange membrane 2' (when compared to each other). More particularly, in the apparatus not according to the invention, the transport of hydroxyls (hydroxyl ions) ($OH^-$) through the higher (or first) hydroxyl transport CEM 1' is higher when compared to the transport of hydroxyls through the lower (or second) hydroxyl transport CEM 2', under same conditions. More particularly, the transport of hydroxyls through first CEM 1' is higher when compared to the transport of hydroxyls through second CEM 2'. In other words, the higher (or first) hydroxyl transport CEM 1' has a first $OH^-$ (hydroxyl) transport number and the lower (or second) hydroxyl transport CEM 2' has a second $OH^-$ transport number, the second $OH^-$ transport number being smaller (or lower) than the first $OH^-$ transport number, when considered under given (same) circumstances. In other words, first CEM 1' has a first $OH^-$ transport number and second CEM 2' has a second $OH^-$ transport number, the second $OH^-$ transport number being smaller (or lower) than the first $OH^-$ transport number. Advantageously, in the apparatus not according to the invention, the higher (or first) hydroxyl transport CEM 1' is configured for transporting cations along with hydroxyls through the (first) CEM 1', while the lower (or second) hydroxyl transport CEM 2' is a (so-called) hydroxyl blocking membrane configured for only transporting cations through the (second) CEM 2' and for substantially blocking hydroxyls.

Advantageously, in an apparatus not according to the invention, the specific membrane resistance for the cation passing the (first and second) CEMs 1', 2' is lower than (about) 500 Qcm.

Advantageously, in an apparatus not according to the invention, the areal membrane resistance for the cation passing the (first and second) CEMs 1', 2' is lower than (about) 10 Ωcm$^2$.

Suitable methods for measuring the (specific or areal) membrane resistance will be apparent to those skilled in the art.

Advantageously, in an apparatus not according to the invention, the (first and second) CEMs 1', 2' have a transport number for the cation (counter-ion) passing the membrane being higher than 0.5, advantageously being comprised between (about) 0.7 and (about) 1. Suitable methods for measuring the transport number of the counter-ion will be apparent to those skilled in the art.

Advantageously, in an apparatus not according to the invention, the (first) CEMs 1' have an OH$^-$ transport number being higher than 0.5. Advantageously, the (second) CEMs 2' have an OH$^-$ transport number being lower than 0.5. Suitable methods for measuring the OH$^-$ transport number will be apparent to those skilled in the art.

Advantageously, in an apparatus not according to the invention, the thickness of the (first and second) CEMs 1', 2' is comprised between (about) 10 and (about) 500 μm, advantageously is lower than (about) 200μm.

Suitable higher (or first) hydroxyl transport CEMs 1' and lower (or second) hydroxyl transport CEMs 2' for use in the apparatuses not according to the invention will be apparent to those skilled in the art. By example, a commercially available, higher (or first) hydroxyl transport CEM 1' is diffusion dialysis membrane (DDM) FKD (FuMA-Tech GmbH, Germany). By example, a commercially available, lower (or second) hydroxyl transport CEM 2' is hydroxyl blocker membrane FKB (FuMA-Tech GmbH, Germany).

Advantageously, the membranes (AEM 1, 2) in the apparatuses of the invention are spiral wound, flat sheets, hollow fibers, or tubular. More advantageously, the membranes are spiral wound or flat sheets.

As illustrated in **Figure 4,** an apparatus not according to the present invention, comprises a stack of successive cell units 16' (illustrated by the dashed box in **Figure 4**); each cell unit 16' comprising a recovery compartment 4' (or dialysate compartment) configured for passing a dialysate solution (7') and for collecting base (or alkali) compounds recovered from a feed (6') (comprising base waste, with a concentration gradient of the base (or alkali) between the feed and the dialysate solution), a feed compartment 5 configured for passing a stream of the feed (comprising base waste), and two successive (first and second) cation exchange membranes 1', 2'. The (first and second) successive CEMs 1', 2' are interleaved with the recovery compartment 4' and the (successive) feed compartment 5'. The recovery compartment 4' and the feed compartment 5' alternate in the stack between the anode 12' and the cathode 13'.

According to an aspect not according to the present invention, a stack as in apparatus 15' shown in **Figure 4** can be used for recovering base (or alkali) compounds from a feed (by diffusion dialysis) and simultaneously generating electrical energy (from the directional migration by diffusion dialysis of hydroxyls and cations). Advantageously, the recovered base compounds comprise NaOH, KOH, or NH$_4$(OH).

As already described above, **Figure 4** shows an alternative stack of N repeating cell units 16', representing a multi-compartment stack which is not according to an aspect of the present invention. As illustrated in this **Figure 4,** high(er) (or first) hydroxyl transport CEMs 1' and low(er) (or second) hydroxyl transport CEMs 2' are arranged (in parallel), possibly with spacers in between (not shown here). Due to such successive (consecutive) arrangement of N unit cells, the recovery compartment 4' and the feed compartment 5' alternate in the stack between the anode 12' and the cathode 13'.

In a method not according to the invention (and referring to figure 4), a (initial) feed stream of spent alkali (solution) 6' with impurities (or feed influent, comprising alkali waste) flows through feed compartments 5' and a (initial) stream of dialysate solution 7' (or dialysate influent, or alkali recovery stream influent) flows through recovery compartments 4', with a concentration gradient (of the alkali) between the waste solution and the dialysate solution. Due to the concentration gradient (of the ions across the membranes), cations (C$^+$) (present in the feed stream 6') pass from the feed compartment 5' through the low(er) (or second) hydroxyl transport CEM 2' to the alkali recovery compartment 4' (in the direction of the negative cathode 13'). Cations (present in the feed stream 6') also pass through the high(er) (or first) hydroxyl transport CEM 1' to the alkali recovery compartment 4' (in the direction of the positive anode 12'). Moreover, as in the method not according to the invention, the higher (or first) hydroxyl transport CEM 1' has a first OH$^-$ (hydroxyl) transport number and the lower (or second) hydroxyl transport CEM 2' has a second OH$^-$ transport number, the second OH$^-$ transport number being smaller (or lower) than the first OH$^-$ transport number (when considered under given (same) circumstances), the transport of hydroxyls (hydroxyl ions) (OH$^-$) through the higher (or first) hydroxyl transport CEM 1' is higher when compared to the transport of hydroxyls through the lower (or second) hydroxyl transport CEM 2' (under same conditions). As such, hydroxyl ions (present in the feed stream 6') are also permitted passage, along with the cations, from the feed compartments 5' through the high(er) (or first) hydroxyl transport CEM 1' to the alkali (base) recovery compartment 4' (in the direction of the positive anode 12'), due to the high OH$^-$ transport property of this (first) CEM 1' (although OH$^-$ being negatively charged). However, hydroxyl anions are much less likely to pass, or even do not substantially pass, from the feed compartments 5' through the low(er) (or second) hydroxyl transport CEM 2' (in the direction of the negative cathode 13'), due to the low hydroxyl transport properties of this (second) CEM 2' (CEM 2' substantially blocking hydroxyls). A resulting net flow of hydroxyls is thus sustained through the higher hydroxyl transport cation exchange membrane (1'). Meanwhile, the (anionic) impurities in the feed, such as SO$_4^{2-}$ or Cl$^-$ in NaOH solution, which are comparatively large relative to the hydroxyl anions and negatively charged, do not pass these (first and second) cation exchange membranes 1' or 2' and hence are rejected, and remaining in the feed effluent 9'. This thus results in alkali depleted compartments 5' and alkali-enriched dialysate compartments 4' (collecting alkali compounds from the feed influent (or feed stream) 6). The feed effluent 9' can be further processed (through adequate means) for purification or neutralization, while the recovered (collected) base (alkali) in the dialysate effluent 10' can be re-used.

According to an aspect not according to the invention, base compounds are recovered in the dialysate effluent 10'. Simultaneously, an electrical potential is built up through the stack due to the directional migration (by diffusion dialysis) of the hydroxyls and cations. Electricity can thus be generated.

In an aspect not according to the present invention as described above, electrode rinsing solution influent 8' and effluent 11' is used to rinse the anode 12' and the cathode 13' and electricity conductive wires 14' are connected from the stack with an electricity consumption equipment. By providing a load (not shown) between the anode 12' and the cathode 13' of the diffusion dialysis apparatus not according to the invention as illustrated in **Figure 4,** the generated electrical energy (electricity) is harnessed.

Carrying out a method not according to the invention as described above, base compounds are thus recovered from a feed stream (comprising alkali waste), simultaneously also generating electrical energy (or electric power, or electricity).

An advantage of the apparatus and method of the present invention with respect to prior art is thus that useful products (i.e. acid compounds) can be recovered from a feed stream (comprising acid waste) by diffusion dialysis, simultaneously also generating electrical energy from directional migration by diffusion dialysis of ions (i.e. protons and anions). Alternately different ion transport properties of the successive ion exchange membranes used in the apparatus and method of the invention play a key role in this respect. More particularly, the difference in proton transport through the first AEM 1 compared to the proton transport through the second AEM 2 is playing a key role in this respect. In other words, the high proton transport property of AEM 1 versus the low proton transport property of second AEM 2 is a key to the apparatus and method according to the present invention.

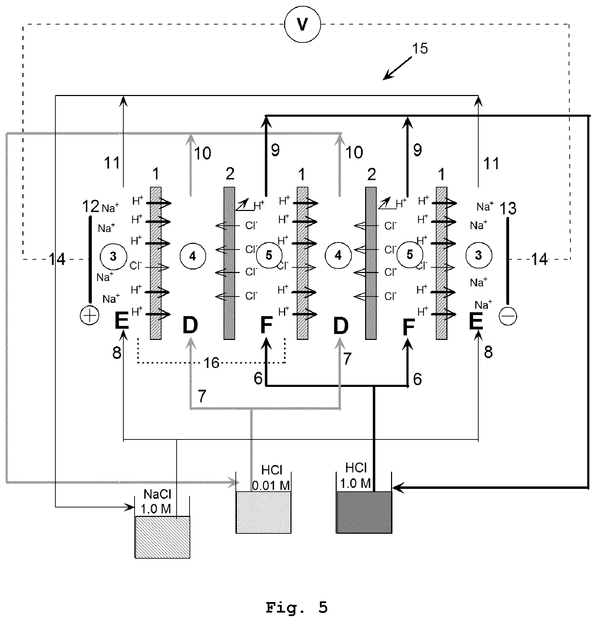

In **Figure 5,** a stack of two cell units 16 according to an aspect of the present invention is shown for illustrative purposes. Advantageously, the stack comprises a multiple (or multitude) of such (parallel disposed) (successive) cell units 16, advantageously at least fifty cell units, advantageously at least one hundred cell units.

In a stack of the invention comprising such a multiple of (successive) cell units 16 (disposed in parallel), the recovery compartments 4 and the feed compartments 5 alternate in the stack.

Advantageously, an apparatus of the invention, illustrated in **Figure 3,** comprises a first electrode rinsing compartment 3 interposed between the (positive) anode 12 and a higher (or first) proton transport AEM 1, and a second electrode rinsing compartment 3 interposed between a higher (or first) proton transport AEM 1 and the (negative) cathode 13. Alternatively, an apparatus not according to the invention, illustrated in **Figure 4,** comprises a first electrode rinsing compartment 3' interposed between the (positive) anode 12' and a higher (or first) hydroxyl transport CEM 1', and a second electrode rinsing compartment 3' interposed between a higher (or first) hydroxyl transport CEM 1' and the (negative) cathode 13'.

The electrode rinsing compartments can be interconnected to form a circulation loop and allow an electrode rinsing solution 8 (8'), such as NaCl, to (re)circulate in (between) the electrode rinsing compartments 3 (3') so as to guarantee an ionic conductivity in the stack. The electrode rinsing solution 8 (8') is advantageously an aqueous solution providing the following reactions:

at the anode side:

$$2H_2O \rightarrow 4H^+ + O_2 + 4e^- ;$$

at the cathode side:

$$2e^- + 2H_2O \rightarrow H_2 + 2OH^-.$$

Advantageously, in an apparatus of the invention the electrode material does not take part in these reactions. Advantageously, the electrode material is corrosion resistant.

Advantageously, in an apparatus of the invention the anode material comprises (or is made of) titanium, platinum, or carbon based material such as graphite, graphene, or activated carbon. Advantageously, the cathode material comprises (or is made of) titanium, platinum, or carbon based material such as graphite, graphene, or activated carbon.

Advantageously, in an apparatus of the invention the electrodes allow for high current density.

Advantageously, in an apparatus of the invention the anode and the cathode are dimensionally stable electrodes (e.g. a dimensionally stable anode (DSA)).

More advantageously, by using dimensionally stable electrodes in an embodiment of the invention, a suitable redox-couple is chosen, as the activation overpotential of the electrodes should be low (i.e. lower than 10% of the generated potential of the stack). As such, redox-couples are chosen in such way that reduced and oxidised electrolyte species (from the electrode rinsing solution) can be re-used at the respective electrodes.

Suitable electrodes for use in an apparatus of the invention will be apparent to those skilled in the art.

Advantageously, in an apparatus of the invention as illustrated in **Figure 3,** the feed compartment 5 comprises a fluid inlet (input) for the feed influent 6 and a fluid outlet (output) for the feed effluent 9. Advantageously, the recovery compartment 4 comprises a fluid inlet (input) for the dialysate influent 7 and a fluid outlet (output) for the dialysate effluent 10. Advantageously, the electrode rinsing compartment 3 comprises a fluid inlet (input) for the electrode rinsing solution influent 8 and a fluid outlet (output) for the electrode rinsing solution effluent 11.

Advantageously, in an apparatus of the invention the solutions in the compartments 4 and 5 are flowing in a concurrent mode, a counter-current mode, or a cross-flow mode with respect to each other, more advantageously the solutions in the compartments 4 and 5 are flowing in a cross-flow mode relative to each other.

Advantageously, an apparatus of the invention comprises pump means for generating fluid flows to the inlets (inputs).

Advantageously, the compartments (or cells) in a stack of the invention comprise a spacer.

By using spacers in an embodiment of the invention, adjacent membranes are kept at a distance to form the compartments between the membranes. Furthermore, spacers contribute to the pressure drop over the device.

More advantageously, the spacers show low hydraulic resistance, in order to ensure low pressure drops over the inlet and outlet of the compartments, and to achieve higher net-power density for the system.

More advantageously, the thickness of the spacers is lower than (about) $500\mu m$, more advantageously is lower than (about) $200\mu m$.

More advantageously, the material of the spacers is resistant to the composition of the feed stream.

A diffusion dialysis apparatus according to the invention can be used with the concentration of the feed influent (or initial feed stream) 6 being higher than the concentration of the dialysate influent (or initial dialysate stream) 7 by a ratio of 1 to 0.01 (1:0.01).

Finding a suitable electrode rinsing solution 8 for use in a method and apparatus according to the present invention is well within the practice of those skilled in the art.

As illustrated in **Figure 3,** the flow of the solutions in compartments 4 and 5 in a method of the invention is concurrent relative to each other. However, other types of flow configurations, such as countercurrent or cross-flow, are possible as well. Advantageously, the solutions in the compartments 4 and 5 are flowing in a cross-flow mode.

In an embodiment according to (a method and apparatus of) the invention, the feed compartments 5, the dialysate compartments 4, or the electrode rinsing compartments 3 can be interconnected to form a (closed, continuous) circulation loop between the feed influent 6 and the feed effluent 9, between the dialysate influent 7 and the dialysate effluent 10, or between the electrode rinsing solution influent 8 and the electrode rinsing solution effluent 11, respectively, as shown in **Figure** 5. Alternatively, the flows in the feed compartments, the dialysate compartments, or the electrode rinsing compartments can be provided in so-called "feed and bleed" flows.

Advantageously, in a method of the invention, the feed influent (or initial stream of feed) 6 and the dialysate influent (or initial stream of dialysate) 7 are supplied (using pump means for generating fluid flows) to the respective inlets at a flow ratio of 0.01 to 100.

Advantageously, in a method of the invention, the concentration of the feed influent (or initial feed stream) 6 is higher than the concentration of the dialysate influent (or initial dialysate stream) 7 by a ratio of 1 to 0.01 (1:0.01).

## EXAMPLES

### Example 1: Measuring OCV using the stack of Figure 5

**Figure 5** shows an example (schematic diagram) of a stack used for recovering acid compounds from a feed stream, the stack comprising two repeating unit cells 16 forming thus six compartments. More particularly, three diffusion dialysis membranes DF-120 (high proton transport (first) AEMs 1) and two proton blocker membranes FAB (low proton transport (second) AEMs 2) were installed in this system which configured two electrode rinsing compartments 3, two dialysate compartments 4, and two feed compartments 5. A multi-meter was used to measure the voltage across this stack by putting the probes 14 in the anode 12 and cathode 13. Initial feed was 1.0 M HCl, initial dialysate was 0.01 M HCl and initial electrode rinsing solution was 1.0 M NaCl. The liquids were pumped and recirculated in three closed loops by peristaltic pumps with a flow rate of 30 Lh⁻¹. An open circuit voltage (OCV) of 40 mV was measured by the multi-meter from this example, which is a comparable value with the voltage measured from a well-designed reverse electrodialysis stack by applying 1.0 M NaCl in the diluate and 0.01 M NaCl in the concentrate (around 2.6 V by using 50 cell pairs, corresponding to around 50 mV per cell pair). The flow rates in the different compartments were varied from 0 ml/min to 450 ml/min to around 800 ml/min. A clear increase in the OCV was measured. Without circulation of flows in the compartments, the OCV dropped almost instantly to 0V. At 450 ml/min, the OCV was around 30mV and the OCV was above 40mV at the highest flow rate. This clearly indicates that the process involved is limited by diffusion layer effects at the membranes. The example shows that increasing flow rates lead to lower diffusion layer thickness, hence higher concentration gradient of the ions across the membranes, and consequently higher OCV.

In accordance with one or more embodiments of the invention, the electrical energy possibly drawn from a stack of the invention may be calculated, as explained in the Appendix.

**Example 2: Recovering acid compounds from a waste stream and (simultaneously) generating electrical energy**

Considering a waste acid feed stream from titanium oxide production industry, said waste stream comprising 70g/L HCl, 12g/L Fe, 7.3g/L Zr, and other metal ions.

By using a method of the invention as described above and a 100mmx900mm stack of the invention with 100 membrane cell units, 1000 Liter (L) of this waste stream can be treated per day with the energy production of 1 MJ. Meanwhile, more than 80% of the acid (HCl) can be recovered and more than 90% of the metal ions in the waste stream are retained in the feed for further recovery.

Using a method and apparatus of the invention, around 1MJ energy can thus be generated per 1000L of waste (stream), while around 80% acids can be recovered (from a waste acid feed stream), which can be re-used for further industrial processes. Moreover, as only around 20% of acid is retaining in the feed stream, only around 20% base is needed to further neutralise this stream. Using a method and apparatus of the invention, the total (operational) cost can thus be (further) reduced, compared to prior art apparatuses and methods, while simultaneously electrical energy is generated.

**Example 3 not according to the invention: Recovering base (or alkali) compounds from a waste stream and (simultaneously) generating electrical energy**

Considering a waste base (alkali) feed stream from petroleum industry comprising 50 g/L NaOH, 10 g/L NaHS, 20 g/L $Na_2CO_3$ and 0.5 g/L oil (as TOC) .

By using a method as described above and a 100mmx900mm stack of the invention with 100 membrane cell units, 1000 Liter of this waste stream can be treated per day with the energy production of 0.5 MJ. Meanwhile, more than 60% of the alkali (NaOH) can be recovered (from a waste base feed stream) and more than 90% of the impurity anions and TOC are retained in the feed for further recovery. Moreover, as only around 40% of base is retaining in the feed stream, only around 40% acid is needed to further neutralise this stream. Using a method and apparatus as described above, the total (operational) cost can thus be (further) reduced, compared to prior art apparatuses and methods, while simultaneously electrical energy is generated.

**Example 4: Comparative example**

The same acid waste feed stream as in **Example 2** is considered, but said waste stream now being neutralized by adding (about) 77g/L NaOH (or (about) 95g/L $Ca(OH)_2$, depending on the industrial application) prior to performing a treatment by nanofiltration.

In this example, around 80g/L of NaOH has thus to be spent to neutralize the acid waste stream, whereas by using the method of the present invention in **Example 2,** only 16g/L of NaOH is needed, as in **Example 2** only (less than) 20% of the acid (HCl) is retained in the feed stream.

As such, in the present **Example 4,** a huge amount of chemicals is consumed (when compared to a method of the present invention illustrated in **Example 2**). Moreover, in this **Example 4,** the acid in the feed stream cannot be recovered, and no electricity can be generated.

To the contrary, using a method and apparatus of the invention, up to 80% base can thus be saved (cf. **Example 2**) (further) reducing the total (operational) cost compared to prior art apparatuses and methods, while simultaneously also electrical energy is generated.

From the description and the examples above, it follows that the present invention thus provides an improved diffusion dialysis apparatus and related method for product recovery by diffusion dialysis, which overcome the disadvantages of prior art apparatuses and methods.

In particular, the present invention provides diffusion dialysis apparatuses and methods having the advantage that products are recovered from a feed stream (by diffusion dialysis), simultaneously also generating electrical energy.

Furthermore, the present invention provides diffusion dialysis apparatuses and methods for which the performance of the apparatus and the processing capability of the related method are improved compared to prior art apparatuses and methods.

Moreover, the present invention provides diffusion dialysis apparatuses and methods having the advantage that the total (operational) cost is (further) lowered compared to prior art apparatuses and methods.

## Appendix: Theoretical calculation of power generation

The osmotic pressure of an ideal solution with low concentration can be approximated by the following equation:

$$\pi = iMRT \tag{1}$$

wherein

$i$     is the Van't Hoff factor (dimensionless)
$M$    is the solute molarity (mol/L)
$R$     is the gas constant of 0.0821 L atm $K^{-1}$ $mol^{-1}$
$T$     is the thermodynamic absolute temperature (K)

The osmotic pressure of a stream with 2M HCl to pure water (at room temperature) is around 50 bar, while the osmotic pressure of a stream with 2M $H_2SO_4$ to pure water (at room temperature) is around 70 bar. Such an osmotic pressure of 50 bar corresponds to a pressure of a 500 meter high water column. This reflects that $1m^3$ volume of 2M HCl at room temperature can lift up 1 $m^3$ volume of pure water to 250 meter high.

Furthermore, the potential energy ($E_p$) within $1m^3$ of 2M HCl (roughly 1000 kg) can be calculated from the following equation:

$$E_p = mgh \tag{2}$$

wherein

$m$    is the mass of water (kg)
$g$     is the gravitational constant 9.8 m $sec^{-1}$
$h$     is the height

Using this equation (2), the potential energy within $1m^3$ of 2M HCl, $E_{p(HCl,2M)}$, is calculated to be 2.45 MJ. Assuming the energy in $1m^3$ of 2M HCl is extracted in 1 second, the generated electricity is 2.45 MW.

In titanium oxide production industry, every 1 ton of product produces around 8 tons of 20% $H_2SO_4$ (2M), and the (potential) dilution energy is 27.44 MJ. A mid-size titanium oxide production company produces 100 000 ton product ($TiO_2$) per year and around 30 L 20% $H_2SO_4$ (waste acid) per second is expected from the production line. Therefore, the energy production by the method of the present invention can be roughly calculated around 100 KW.

## Claims

1. Diffusion dialysis apparatus (15) comprising:
   a plurality of anion exchange membranes (1,2) arranged so as to form a stack of successive cell units (16), each cell unit (16) comprising a dialysate compartment (4) configured for passing a dialysate solution (7) and for collecting acid compounds recovered from a feed, a feed compartment (5) configured for passing a stream of the feed (6) comprising acid waste with a concentration gradient of the acid between the feed and dialysate solution, and two anion exchange membranes (1,2) stacked so as to be interleaved with the dialysate compartment (4) and the feed compartment (5); **characterised in that** the apparatus comprises an anode (12) and a cathode (13), wherein the cell units (16) are placed between the anode (12) and the cathode (13), and **in that** successive anion exchange membranes (1,2) in the stack of successive cell units (16) are alternately a higher proton transport anion exchange membrane (1) and a lower proton transport anion exchange membrane (2), wherein the higher proton transport anion exchange membrane (1) has a first $H^+$ transport number and the lower proton transport anion exchange membrane (2) has a second $H^+$ transport number, the second $H^+$ transport number being smaller than the first $H^+$ transport number, such that, in use, the transport of protons through the higher proton transport anion exchange membrane (1) is higher when compared to the transport of protons through the lower proton transport anion exchange membrane (2) and acid compounds from the stream of feed (6) are recovered in the dialysate compartment (4) by diffusion dialysis and electrical energy is generated from the directional migration by diffusion dialysis of protons and anions.

2.  Diffusion dialysis apparatus of claim 1, wherein the lower proton transport anion exchange membrane (2) is a proton blocking membrane.

3.  Diffusion dialysis apparatus of any one of claim 1 to 2, wherein the areal membrane resistance for the anion passing the anion exchange membranes (1,2) is lower than 10 $\Omega cm^2$.

4.  Diffusion dialysis apparatus of any one of claim 1 to 3, wherein the proton transport number of the higher proton transport anion exchange membrane (1) is higher than 0.5.

5.  Diffusion dialysis apparatus of any one of claim 1 to 4, wherein the proton transport number of the lower proton transport anion exchange membrane (2) is lower than 0.5.

6.  Diffusion dialysis apparatus of any one of claim 1 to 5, comprising a multiple of successive cell units (16), more preferably at least (about) fifty cell units (16), even more preferably at least (about) one hundred cell units (16).

7.  Use of a diffusion dialysis apparatus according to any one preceding claim, wherein the apparatus is configured for generating electrical energy over the anode (12) and the cathode (13).

8.  Use of a diffusion dialysis apparatus according to claim 7, for recovering acid compounds selected from the group of HCl, HF, $HNO_3$, $H_2SO_4$, $H_3PO_4$, and organic acids.

9.  Method for recovering acid compounds from a feed and generating electrical energy, said method comprising: passing a feed solution comprising acid waste between two anion exchange membranes (1,2) and passing a dialysate solution at the other sides of the anion exchange membranes (1,2), wherein there is a concentration gradient of an acid between the feed solution and the dialysate solution, wherein one of the anion exchange membranes (1,2) is a higher proton transport anion exchange membrane (1) and the other one is a lower proton transport anion exchange membrane (2), wherein the higher proton transport anion exchange membrane (1) has a first $H^+$ transport number and the lower proton transport anion exchange membrane (2) has a second $H^+$ transport number, the second $H^+$ transport number being smaller than the first $H^+$ transport number, such that a resulting net flow of protons is sustained through the higher proton transport anion exchange membrane (1), and providing the anion exchange membranes (1,2) in between an anode (12) and a cathode (13) to generate electrical energy from a directional migration by diffusion dialysis of protons and anions.

10. Method of claim 9, wherein the concentration of the initial feed stream (6) is higher than the concentration of the initial dialysate stream (7) by a ratio of 1 to 0.01.

11. Method of any one of claim 9 to 10, wherein the initial feed stream (6) and the initial dialysate stream (7) are supplied to the respective inlets at a flow ratio of 0.01 to 100.

**Patentansprüche**

1.  Diffusionsdialysevorrichtung (15), umfassend:
    mehrere Anionenaustauschmembranen (1, 2), die so angeordnet sind, dass sie einen Stapel aufeinanderfolgender Zelleneinheiten (16) ausbilden, wobei jede Zelleneinheit (16) eine Dialysatkammer (4), die ausgelegt ist, eine Dialysatlösung (7) durchzulassen und Säureverbindungen anzusammeln, die aus einer Einspeisung zurückgewonnen werden, eine Einspeisungskammer (5), die ausgelegt ist, einen Strom der Einspeisung (6) durchzulassen, der Säureabfall mit einem Konzentrationsgradient der Säure zwischen der Einspeisung und der Dialysatlösung umfasst, und zwei Anionenaustauschmembranen (1, 2), die so gestapelt sind, dass sie mit der Dialysatkammer (4) und der Einspeisungskammer (5) verzahnt sind, umfasst; **dadurch gekennzeichnet, dass** die Vorrichtung eine Anode (12) und eine Kathode (13) umfasst, wobei die Zelleneinheiten (16) zwischen der Anode (12) und der Kathode (13) angeordnet sind, und dadurch, dass aufeinanderfolgende Anionenaustauschmembranen (1, 2) in dem Stapel aufeinanderfolgender Zelleneinheiten (16) abwechselnd eine Anionenaustauschmembran mit höherer Protonenüberführung (1) und eine Anionenaustauschmembran mit geringerer Protonenüberführung (2) sind, wobei die Anionenaustauschmembran mit höherer Protonenüberführung (1) eine erste $H^+$-Überführungszahl aufweist und die Anionenaustauschmembran mit geringerer Protonenüberführung (2) eine zweite $H^+$-Überführungszahl aufweist, wobei die zweite $H^+$-Überführungszahl derartig kleiner ist als die erste $H^+$-Überführungszahl, dass beim Betrieb die Überführung der Protonen durch die Anionenaustauschmembran mit höherer Protonenüberführung (1) höher ist als im Vergleich zu der Überführung der Protonen durch die Anionenaustauschmembran mit geringerer Protonenüberführung (2) und Säureverbindungen aus dem Strom der Einspeisung (6) in der Dialysatkammer (4) durch Diffusionsdialyse zurückgewonnen werden und aus der gerichteten Migration durch Diffusionsdialyse von Protonen und Anionen elektrische Energie erzeugt wird.

2. Diffusionsdialysevorrichtung nach Anspruch 1, wobei die Anionenaustauschmembran mit geringerer Protonenüberführung (2) eine Protonensperrmembran ist.

3. Diffusionsdialysevorrichtung nach irgendeinem der Ansprüche 1 bis 2, wobei der Membranflächenwiderstand für das Anion, das die Anionenaustauschmembranen (1, 2) passiert, geringer ist als 10 $\Omega cm^2$.

4. Diffusionsdialysevorrichtung nach irgendeinem der Ansprüche 1 bis 3, wobei die Protonenüberführungszahl der Anionenaustauschmembran mit höherer Protonenüberführung (1) höher ist als 0,5.

5. Diffusionsdialysevorrichtung nach einem der Ansprüche 1 bis 4, wobei die Protonenüberführungszahl der Anionenaustauschmembran mit geringerer Protonenüberführung (2) geringer ist als 0,5.

6. Diffusionsdialysevorrichtung nach irgendeinem der Ansprüche 1 bis 5, umfassend mehrere aufeinanderfolgende Zelleneinheiten (16), besonders bevorzugt mindestens (ungefähr) fünfzig Zelleneinheiten (16), ganz besonders bevorzugt mindestens (ungefähr) einhundert Zelleneinheiten (16).

7. Verwendung einer Diffusionsdialysevorrichtung nach irgendeinem der vorhergehenden Ansprüche, wobei die Vorrichtung zum Erzeugen elektrischer Energie über die Anode (12) und die Kathode (13) ausgelegt ist.

8. Verwendung einer Diffusionsdialysevorrichtung nach Anspruch 7 zum Zurückgewinnen von Säureverbindungen, die ausgewählt sind aus der Gruppe, bestehend aus HCl, HF, $HNO_3$, $H_2SO_4$, $H_3PO_4$ und organischen Säuren.

9. Verfahren zum Zurückgewinnen von Säureverbindungen aus einer Einspeisung und zum Erzeugen elektrischer Energie, das besagte Verfahren umfassend:
Durchlassen einer Einspeisungslösung, die Säureabfall umfasst, zwischen zwei Anionenaustauschmembranen (1, 2) und Durchlassen einer Dialysatlösung auf den anderen Seiten der Anionenaustauschmembranen (1, 2), wobei ein Konzentrationsgradient einer Säure zwischen der Einspeisungslösung und der Dialysatlösung vorhanden ist, wobei eine der Anionenaustauschmembranen (1, 2) eine Anionenaustauschmembran mit höherer Protonenüberführung (1) ist und die andere eine Anionenaustauschmembran mit geringerer Protonenüberführung (2) ist, wobei die Anionenaustauschmembran mit höherer Protonenüberführung (1) eine erste $H^+$-Überführungszahl aufweist und die Anionenaustauschmembran mit geringerer Protonenüberführung (2) eine zweite $H^+$-Überführungszahl aufweist, wobei die zweite $H^+$-Überführungszahl derartig kleiner ist als die erste $H^+$-Überführungszahl, dass ein resultierender Nettostrom von Protonen durch die Anionenaustauschmembran mit höherer Protonenüberführung (1) aufrechterhalten wird, und Bereitstellen der Anionenaustauschmembranen (1, 2) zwischen einer Anode (12) und einer Kathode (13), um aus einer gerichteten Migration durch Diffusionsdialyse von Protonen und Anionen elektrische Energie zu erzeugen.

10. Verfahren nach Anspruch 9, wobei die Konzentration des anfänglichen Einspeisungsstroms (6) um ein Verhältnis von 1 bis 0,01 höher ist als die Konzentration des anfänglichen Dialysatstroms (7).

11. Verfahren nach irgendeinem der Ansprüche 9 bis 10, wobei der anfängliche Einspeisungsstrom (6) und der anfängliche Dialysatstrom (7) in einem Stromverhältnis von 0,01 bis 100 den jeweiligen Einlässen zugeführt werden.

**Revendications**

1. Appareil de dialyse par diffusion (15) comprenant :
une pluralité de membranes échangeuses d'anions (1, 2) agencées de façon à former un empilement d'unités cellulaires (16) successives, chaque unité cellulaire (16) comprenant un compartiment (4) pour dialysat conçu pour faire passer une solution de dialysat (7) et pour collecter des composés acides récupérés d'une charge, un compartiment (5) pour charge conçu pour faire passer un flux de la charge (6) comprenant des déchets acides avec un gradient de concentration de l'acide entre la charge et la solution de dialysat, et deux membranes échangeuses d'anions (1, 2) empilées de façon à être entremêlées avec le compartiment (4) pour dialysat et le compartiment (5) pour charge ; **caractérisé en ce que** l'appareil comprend une anode (12) et une cathode (13), les unités cellulaires (16) étant placées entre l'anode (12) et la cathode (13), et **en ce que** des membranes échangeuses d'anions (1, 2) successives dans l'empilement d'unités cellulaires (16) successives sont alternativement une membrane échangeuse d'anions de transport de protons supérieure (1) et une membrane échangeuse d'anions de transport de protons inférieure (2), la membrane échangeuse d'anions de transport de protons supérieure (1) ayant un premier nombre de transport $H^+$ et la membrane échangeuse d'anions de transport de protons inférieure (2) ayant un second nombre de transport $H^+$, le second nombre de transport $H^+$ étant plus petit que le premier nombre de transport $H^+$, de sorte que, lors de l'utilisation, le transport de protons à travers la membrane échangeuse d'anions de transport de protons supérieure (1) soit supérieur comparativement au transport de protons à travers la membrane échangeuse d'anions de transport de protons inférieure (2) et que des composés acides provenant du flux de charge (6) soient récupérés dans le compartiment (4) pour dialysat par une dialyse par diffusion et qu'une énergie électrique soit produite à partir de la migration directionnelle par la dialyse par diffusion des protons et des anions.

2. Appareil de dialyse par diffusion selon la revendication 1, dans lequel la membrane échangeuse d'anions de transport de protons inférieure (2) est une membrane de blocage de protons.

3. Appareil de dialyse par diffusion selon l'une quelconque des revendications 1 à 2, dans lequel la résistance surfacique de membrane pour l'anion passant les membranes échangeuses d'anions (1, 2) est inférieure à 10 $\Omega$cm$^2$.

4. Appareil de dialyse par diffusion selon l'une quelconque des revendications 1 à 3, dans lequel le nombre de transport de protons de la membrane échangeuse d'anions de transport de protons supérieure (1) est supérieur à 0,5.

5. Appareil de dialyse par diffusion selon l'une quelconque des revendications 1 à 4, dans lequel le nombre de transport de protons de la membrane échangeuse d'anions de transport de protons inférieure (2) est inférieur à 0,5.

6. Appareil de dialyse par diffusion selon l'une quelconque des revendications 1 à 5, comprenant un multiple d'unités cellulaires (16) successives, plus préférentiellement au moins (environ) cinquante unités cellulaires (16), encore plus préférentiellement au moins (environ) cent unités cellulaires (16).

7. Utilisation d'un appareil de dialyse par diffusion selon l'une quelconque des revendications précédentes, l'appareil étant conçu pour produire une énergie électrique sur l'anode (12) et la cathode (13).

8. Utilisation d'un appareil de dialyse par diffusion selon la revendication 7, permettant de récupérer des composés acides choisis parmi le groupe constitué par HCl, HF, HNO$_3$, H$_2$SO$_4$, H$_3$PO$_4$ et des acides organiques.

9. Procédé de récupération de composés acides à partir d'une charge et de production d'énergie électrique, ledit procédé consistant à :
faire passer une solution de charge comprenant des déchets acides entre deux membranes échangeuses d'anions (1, 2) et faire passer une solution de dialysat au niveau des autres côtés des membranes échangeuses d'anions (1, 2), un gradient de concentration d'un acide existant entre la solution de charge et la solution de dialysat, une des membranes échangeuses d'anions (1, 2) étant une membrane échangeuse d'anions de transport de protons supérieure (1) et l'autre étant une membrane échangeuse d'anions de transport de protons inférieure (2), la membrane échangeuse d'anions de transport de protons supérieure (1) ayant un premier nombre de transport $H^+$ et la membrane échangeuse d'anions de transport de protons inférieure (2) ayant un second nombre de transport $H^+$, le second nombre de transport $H^+$ étant plus petit que le premier nombre de transport $H^+$, de sorte qu'un flux net résultant de protons soit maintenu à travers la membrane échangeuse d'anions de transport de protons supérieure (1), et fournir les membranes échangeuses d'anions (1, 2) entre une anode (12) et une cathode (13) pour générer une énergie électrique à partir d'une migration directionnelle par dialyse par diffusion de protons et d'anions.

10. Procédé selon la revendication 9, dans lequel la concentration du flux de charge initial (6) est supérieure à la concentration du flux de dialysat initial (7) à raison d'un rapport de 1 à 0,01.

11. Procédé selon l'une quelconque des revendications 9 et 10, dans lequel le flux de charge initial (6) et le flux de dialysat initial (7) sont introduits dans les orifices d'entrée respectifs à un débit de 0,01 à 100.

Fig. 1

Fig. 2

Fig. 3

Fig. 4

Fig. 5

## REFERENCES CITED IN THE DESCRIPTION

### Patent documents cited in the description

- US 5062960 A
- US 4954262 A
- US 4765905 A
- US 6358484 B
- US 5843316 A
- EP 1746680 A
- US 7736791 B
- WO 2010062175 A
- US 4311771 A
- WO 2012061215 A
- JP S62105922 A

### Non-patent literature cited in the description

- **LUO et al.** *Journal of Membrane Science,* 2011, vol. 366, 1-16